# EUROPEAN PATENT SPECIFICATION

(11) **EP 4 589 436 B1**
(45) Date of publication and mention of the grant of the patent: **08.07.2026**
(21) Application number: 24203747.1
(22) Date of filing: 30.09.2024
(51) Int. Cl.: G06F 9/54, G06F 9/455, G06F 9/4401, G06F 21/53

(54) **INTER-APPLICATION COMMUNICATION METHOD AND APPARATUS BASED ON VIRTUALIZED DEVICE, AND ELECTRONIC DEVICE**
KOMMUNIKATIONSVERFAHREN UND -VORRICHTUNG ZWISCHEN ANWENDUNGEN AUF BASIS EINER VIRTUALISIERTEN VORRICHTUNG UND ELEKTRONISCHE VORRICHTUNG
PROCÉDÉ ET APPAREIL DE COMMUNICATION ENTRE APPLICATIONS BASÉS SUR UN DISPOSITIF VIRTUALISÉ, ET DISPOSITIF ÉLECTRONIQUE

(30) Priority: 17.01.2024 CN 202410070480
(43) Date of publication of application: 23.07.2025
(73) Proprietor: Beijing Volcano Engine Technology Co., Ltd., Beijing 100190 (CN)
(72) Inventor: LI, Zebin, Beijing, 100028 (CN); HUANG, Zijing, Beijing, 100028 (CN); DENG, Qiao, Beijing, 100028 (CN)
(74) Representative: Marks & Clerk LLP

(56) References cited:
- US-A1- 2020 183 729
- WHITEPAPER AWS: "The Security Design of the AWS Nitro System", 26 July 2023 (2023-07-26), pages 1 - 32, XP093254421, Retrieved from the Internet <URL:https://web.archive.org/web/20230726145836/https://docs.aws.amazon.com/pdfs/whitepapers/latest/security-design-of-aws-nitro-system/security-design-of-aws-nitro-system.pdf> [retrieved on 20250226]
- -: "DPDK documentation Release 2.1.0", 18 August 2015 (2015-08-18), pages 1 - 523, XP055556265, Retrieved from the Internet <URL:https://media.readthedocs.org/pdf/dpdk/v2.1.0/dpdk.pdf> [retrieved on 20190213]
- RUSSELL RUSTY: "Virtio PCI Card Specication v0.9.5 DRAFT", 7 May 2012 (2012-05-07), pages 1 - 62, XP093254488, Retrieved from the Internet <URL:https://ozlabs.org/~rusty/virtio-spec/virtio-0.9.5.pdf> [retrieved on 20250226]

## Description

### TECHNICAL FIELD

Embodiments of the present disclosure relate to the field of virtualization technologies, and in particular, to an inter-application communication method and apparatus based on a virtualized device, and an electronic device.

### BACKGROUND

At present, in the field of virtualization technologies, a compute card including a data processing unit (DPU) is installed on a host, and various workloads are offloaded from a central processing unit (CPU) to the data processing unit for execution, thereby improving the overall working performance of the host.

In a specific application scenario in which a workload is offloaded through a compute card, a virtualized device is offloaded to be run in the data processing unit in the compute card, and the high execution efficiency of the data processing unit is leveraged to improve the efficiency of inter-application communication using the virtualized device.

However, in the solutions in the prior art, the compute card and the virtualized device need to be adapted in advance, resulting in poor stability and high risk of the virtual machine system, and high costs of use and maintenance. US 2020/183729A1 discloses a core solution called MUSE (Mdev in User SpacE) that allows mediated pass-through device to be served by software running in user space.

### SUMMARY

Embodiments of the present disclosure provide an inter-application communication method and apparatus based on a virtualized device, and an electronic device, to overcome the problems of poor stability and high risk, and high costs of use and maintenance of a virtual machine system. The invention is set out in the appended set of claims.

According to the inter-application communication method and apparatus based on a virtualized device, and the electronic device provided in the embodiments, a first event message sent by a first application running in an operating system of a host is received, where the first event message is used to request a second application running in an operating system of a compute card to perform a target function, and the operating system of the host communicates with the operating system of the compute card through a driver; the first event message is processed through an event proxy to generate a second event message including an event file descriptor, where the event proxy is configured to implement bidirectional mapping between the event file descriptor and the driver, and the event file descriptor is used to implement communication between the first application and the second application based on the virtualized device; and the second event message is sent to the virtualized device, and the virtualized device establishes the communication between the first application and the second application, so that the second application performs the target function corresponding to the first event message. The event proxy is disposed on a side of the operating system of the compute card, and the first event message sent by the operating system of the host is converted into the second event message including the event file descriptor through the event proxy, in this way, it is realized that information synchronization can be done by the virtualized device based on the event file descriptor, so that the second application communicating with the virtualized device performs the target function. Because the event proxy provides a message translation function, code of the virtualized device does not need to be modified in this process to adapt to the driver of the compute card, thereby avoiding a risk of system stability caused by code modification, and reducing the costs of use and maintenance of the compute card.

### BRIEF DESCRIPTION OF DRAWINGS

In order to more clearly describe the technical solutions in the embodiments of the present disclosure or in the prior art, the following briefly describes the accompanying drawings required for describing the embodiments or the prior art. Apparently, the accompanying drawings in the following description show some embodiments of the present disclosure, and a person of ordinary skill in the art may still derive other drawings from these accompanying drawings without paying creative efforts.
FIG. 1 is an application scenario diagram of an inter-application communication method based on a virtualized device provided by an embodiment of the present disclosure.
FIG. 2 is a first schematic flowchart of an inter-application communication method based on a virtualized device provided by an embodiment of the present disclosure.
FIG. 3 is a flowchart of a specific implementation of step S102 in the embodiment shown in FIG. 2.
FIG. 4 is a second schematic flowchart of an inter-application communication method based on a virtualized device provided by an embodiment of the present disclosure.
FIG. 5 is a flowchart of a specific implementation of step S206 in the embodiment shown in FIG. 4.
FIG. 6 is a flowchart of a specific implementation of step S208 in the embodiment shown in FIG. 4.
FIG. 7 is a schematic diagram of a process of communication based on a virtualized device provided by an embodiment of the present disclosure.
FIG. 8 is a structural block diagram of an inter-application communication apparatus based on a virtualized device provided by an embodiment of the present disclosure.
FIG. 9 is a structural schematic diagram of an electronic device provided by an embodiment of the present disclosure.
FIG. 10 is a schematic diagram of a hardware structure of an electronic device provided by an embodiment of the present disclosure.

### DESCRIPTION OF EMBODIMENTS

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without paying creative efforts shall fall within the protection scope of the present disclosure.

It should be noted that the user information (including but not limited to user device information and user personal information) and data (including but not limited to data used for analysis, stored data, and displayed data) involved in the present disclosure are information and data that are authorized by users or fully authorized by all parties. In addition, collection, use and processing of the relevant data need to comply with relevant laws, regulations, and standards of relevant countries and regions, and corresponding operation entries are provided for users to select to authorize or refuse.

An application scenario of the embodiments of the present disclosure is described below.

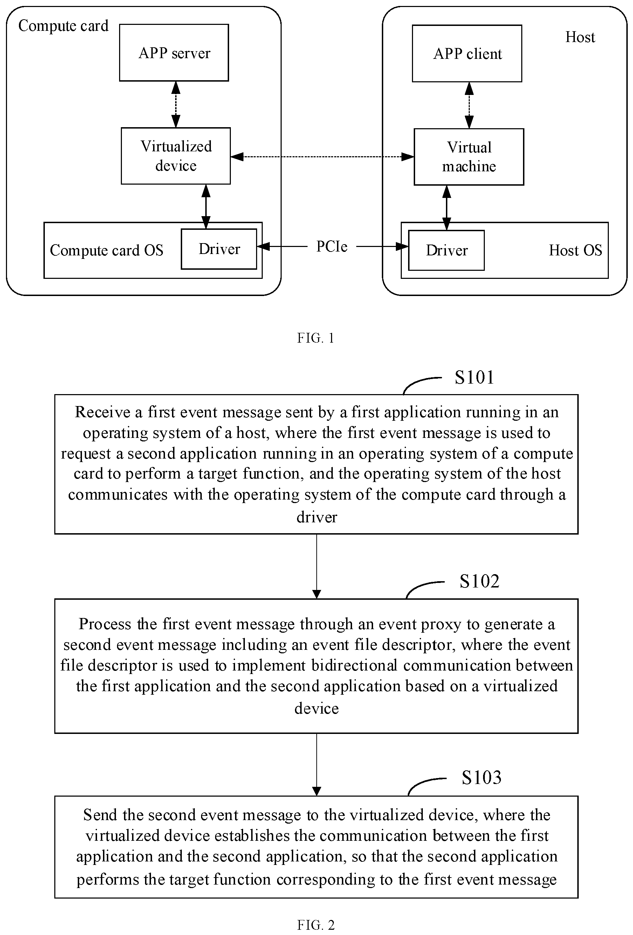

FIG. 1 is an application scenario diagram of an inter-application communication method based on a virtualized device provided by an embodiment of the present disclosure. The inter-application communication method based on a virtualized device provided in the embodiment of the present disclosure may be applied to a device virtual machine or cloud computing scenario. More specifically, the method may be applied to an application scenario in which a compute card is used to implement communication for a virtual machine application based on a virtualized device. An execution subject of this embodiment may be a data processing unit (DPU) chip or a compute card provided with a data processing unit. As shown in FIG. 1, the compute card is connected to a host through a PCIe interface. On a side of the host, one or more virtual machines (Guest VM) are created through a virtualization technology. An application client (shown as an APP client in the figure) running on the virtual machine is essentially also running in an operating system of the host (shown as a host OS in the figure). On a side of the compute card, a virtualized device is running. The virtualized device is an abstraction of a physical device, and is also referred to as a device frontend. The virtualized device runs in an operating system of the compute card, and a message sent by an application server (APP server) is sent to the virtual machine through the virtualized device and a driver in the operating system of the compute card (namely, a DPU OS, shown as a compute card OS in the figure) and a driver in the operating system of the host, so as to reach the application client, thereby realizing communication between the application client and the application server.

In the prior art, in a traditional server scenario without a compute card, the virtualized device, the virtual machine, and the like all run on a same operating system of a host, and communication among them can be implemented through an existing operating system primitive without any additional change. For example, communication between a virtualized device virtiofs and a virtual machine may be directly implemented in a unix domain socket (UDS) manner. However, in a scenario in which virtualized devices are offloaded by using compute cards, because the compute cards are usually independently developed by different third-party vendors, different compute cards usually run different operating systems, resulting in that an operating system of a compute card is different from an operating system of a host. In this case, because the virtualized device runs in the operating system of the compute card, in the prior art, code of the virtualized device needs to be adapted first, so that the virtualized device and a driver of the compute card. In this way, on the one hand, it causes the need for targeted development for each virtualized device and modification of source code, to adapt to an operating environment of the compute card, resulting in high development and maintenance costs and stability problems caused by code modification. On the other hand, the virtualized device whose code is modified can only run on a side of a corresponding compute card (DPU), but cannot run on a side of the operating system of the host, rendering it impossible to implement different deployment configurations for a same piece of code and affecting stability of the virtual machine system.

An embodiment of the present disclosure provides an inter-application communication method based on a virtualized device to solve the foregoing problems.

With reference to FIG. 2, FIG. 2 is a first schematic flowchart of an inter-application communication method based on a virtualized device provided by an embodiment of the present disclosure. The method of this embodiment may be applied to a data processing unit or a compute card including a data processing unit. The inter-application communication method based on a virtualized device includes the following steps.

Step S101: receive a first event message sent by a first application running in an operating system of a host, where the first event message is used to request a second application running in an operating system of a compute card to perform a target function, and the operating system of the host communicates with the operating system of the compute card through a driver.

With reference to the schematic diagram of an application scenario shown in FIG. 1, the first application is, for example, a client application, and the second application is, for example, a server application. The first application runs on a side of the host, and the second application runs on a side of the compute card. When the first application needs to communicate with the second application, (an application process of) the first application sends a first event message from a side of the operating system of the host to a side of the operating system of the compute card through the driver. The first event message is used to request the second application running in the operating system of the compute card to perform the target function. The target function may generally refer to any function that can be implemented by the second application, for example, a data processing function, a picture generation function, or a more basic communication handshake function, a communication channel creation function, or a shared memory creation function. The specific possible implementation of the target function is not limited here, and depends on a specific communication protocol between the first application and the second application. Then, a compute card that is an execution subject of this embodiment receives the first event message through a driver running in the operating system of the compute card. Exemplarily, a specific implementation of communication between the operating system of the host and the operating system of the compute card through the driver is communication through a direct memory access (DMA) driver. Correspondingly, a driver running on a side of the operating system of the compute card is a driver backend, namely, a DMA driver backend; and a driver running on a side of the operating system of the host is a driver frontend, namely, a DMA driver frontend. In a possible implementation, a specific implementation of step S101 includes: receiving, through a driver backend running in the operating system of the compute card, the first event message sent by a driver frontend running in the operating system of the host. A specific implementation of the direct memory access protocol is an existing technology implemented by those skilled in the art, and a detailed description of an implementation of message transmission based on the direct memory access protocol is not provided here.

Step S102: process the first event message through an event proxy to generate a second event message including an event file descriptor, where the event proxy is configured to implement bidirectional mapping between the event file descriptor and the driver, and the event file descriptor is used to implement communication between the first application and the second application based on the virtualized device.

Step S103: send the second event message to the virtualized device, where the virtualized device establishes the communication between the first application and the second application, so that the second application performs the target function corresponding to the first event message.

Exemplarily, after receiving the first event message, to forward the first event message to the virtualized device, the compute card translates the first event message to generate a message that can be received by the virtualized device, that is, the second event message. Specifically, the event proxy is running in the operating system of the compute card. After obtaining the first event message through the driver, the compute card directly sends the first event message to the event proxy or processes the first event message and sends the processed first event message, and the event proxy executes a translation step to generate the second event message. The event proxy has an ability to implement bidirectional mapping between an event file descriptor (eventfd) and the driver. For example, a first event message Info_1 output by a current driver of the compute card is mapped to an event file descriptor eventfd_1 that can be identified by the virtualized device (that is, the driver is mapped to the event file descriptor), so that in a subsequent step, the virtualized device can communicate with the first application based on the event file descriptor eventfd_1. For another example, when the virtualized device inputs an event file descriptor eventfd_2 to the event proxy, the event proxy determines a target driver interface, for example, API_1, in the current driver of the compute card based on the event file descriptor eventfd_2, and then calls the target driver interface API_1 in the driver to simulate an operation corresponding to the file descriptor eventfd_2, thereby realizing communication with the first application on a side of the host. The event file descriptor is an event sending and receiving mechanism in a Linux system kernel. A communication channel is established between a user space and a kernel space by creating a file descriptor (file descriptor, fd), and a read operation and a write operation is performed on the event through the file descriptor. A specific implementation principle of the event file descriptor is not described in detail.

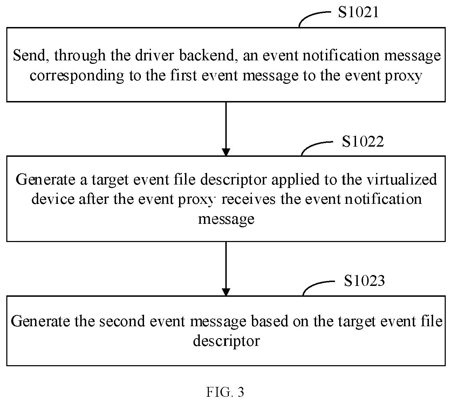

Further, as shown in FIG. 3, in a possible implementation, a specific implementation of step S102 includes the following steps.

Step S1021: send, through the driver backend, an event notification message corresponding to the first event message to the event proxy.

Step S1022: generate a target event file descriptor applied to the virtualized device after the event proxy receives the event notification message.

Step S1023: generate the second event message based on the target event file descriptor.

Exemplarily, first, after receiving the first event message, the driver backend of the compute card generates an event notification message corresponding to the first event message. In a possible implementation, the event notification message may be used only to represent an event notification, that is, as long as the driver backend receives any first event message, the event notification message is generated. More specifically, the event notification message may include any information, for example, a meaningless byte. Then, the event notification message is sent to the event proxy. After receiving the event notification message, the event proxy does not need to parse the event notification message, but directly creates a target event file descriptor applied to the virtualized device, and sends the target event file descriptor to the virtualized device as the second event message, so that the virtualized device can send messages to and receive messages from the first application using the target event file descriptor. After that, after obtaining the target event file descriptor, the virtualized device uses the target event file descriptor to realize transmission of messages and operation instructions between the first application and the second application, thus achieving the objective of enabling the second application to perform the target function. For example, the second application performs a function such as data processing or picture generation based on an operation instruction. The operation instruction may be included in the first event message, or may be included in a third event message that is additionally sent by the first application after the first application establishes communication with the second application. Alternatively, after establishing communication with the first application, the second application performs a corresponding configuration step, to complete the target function. That is, the target function is, for example, a communication handshake function, a communication channel creation function, or a shared memory creation function.

Specifically, the virtualized device is implemented based on an independent user-mode process running in the operating system of the host, for example, a vhost-user device. Certainly, in other possible application scenarios, the virtualized device may also have other implementations. For example, the virtualized device may be a vhost-user-vsock device. The device function of the virtualized device is to establish communication between a host application and a virtual machine application, and a simplified network communication protocol named virtio-vsock is used. The virtio-vsock protocol is based on a virtio protocol, and presents a Linux standard socket interface upward, serving as a protocol manner of communication between the host application and the virtual machine application. The vhost-user-vsock device is a backend emulation device of this protocol. For another example, the virtualized device may be a virtiofs unit. The virtiofs is a file system transmission protocol based on virtio. A file system on a host can be directly mapped to a virtual machine through the virtiofs unit, realizing a function of directly accessing a host file system by using the virtual machine. Specific implementations and principles of the foregoing two virtualized devices are not described in detail here.

In this embodiment, a first event message sent by a first application running in an operating system of a host is received, where the first event message is used to request a second application running in an operating system of a compute card to perform a target function, and the operating system of the host communicates with the operating system of the compute card through a driver; the first event message is processed through an event proxy to generate a second event message including an event file descriptor, where the event proxy is configured to implement bidirectional mapping between the event file descriptor and the driver, and the event file descriptor is used to implement communication between the first application and the second application based on the virtualized device; and the second event message is sent to the virtualized device, and the virtualized device establishes the communication between the first application and the second application, so that the second application performs the target function corresponding to the first event message. The event proxy is disposed on a side of the operating system of the compute card, and the first event message sent by the operating system of the host is converted into the second event message including the event file descriptor through the event proxy, in this way, it is realized that information synchronization can be done by the virtualized device based on the event file descriptor, so that the second application communicating with the virtualized device performs the target function. Because the event proxy provides a message translation function, code of the virtualized device does not need to be modified in this process to adapt to the driver of the compute card, thereby avoiding a risk of system stability caused by code modification, and reducing the costs of use and maintenance of the compute card.

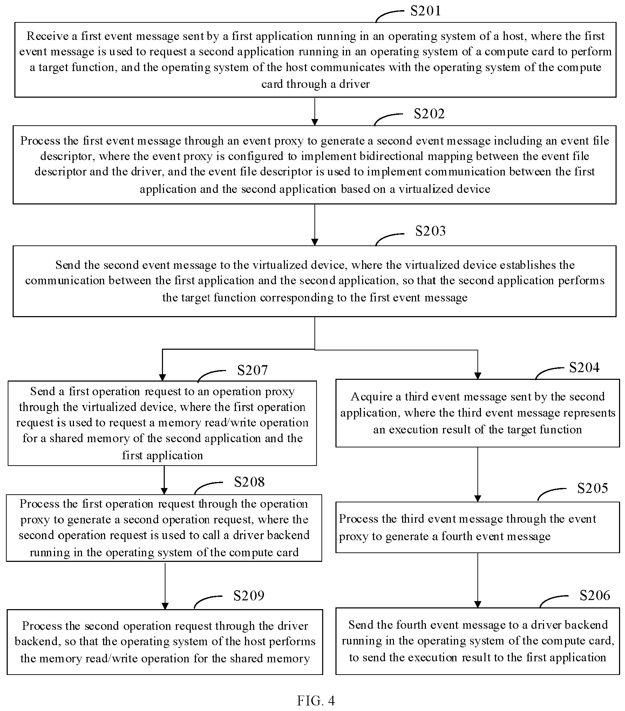

With reference to FIG. 4, FIG. 4 is a second schematic flowchart of an inter-application communication method based on a virtualized device provided by an embodiment of the present disclosure. Based on the embodiment shown in FIG. 2, in this embodiment, steps of sending a message from a second application to a first application and processing a memory read/write operation implemented by a virtualized device are added. The inter-application communication method based on a virtualized device includes the following steps.

Step S201: receive a first event message sent by a first application running in an operating system of a host, where the first event message is used to request a second application running in an operating system of a compute card to perform a target function, and the operating system of the host communicates with the operating system of the compute card through a driver.

Step S202: process the first event message through an event proxy to generate a second event message including an event file descriptor, where the event proxy is configured to implement bidirectional mapping between the event file descriptor and the driver, and the event file descriptor is used to implement communication between the first application and the second application based on the virtualized device.

Step S203: send the second event message to the virtualized device, where the virtualized device establishes the communication between the first application and the second application, so that the second application performs the target function corresponding to the first event message.

Step S204: acquire a third event message sent by the second application, where the third event message represents an execution result of the target function.

Step S205: process the third event message through the proxy to generate a fourth event message.

In this embodiment, implementations of step S201 to step S203 are the same as those of step S201 to step S203 in the embodiment shown in FIG. 2 of the present disclosure, and are not described here one by one. In a possible implementation, after step S201 to step S203 are completed, the second application executes the target function, an execution result of the target function needs to be returned to the first application. Specifically, for example, after executing a data processing task (the target function) requested by the first application, the second application sends a data processing result or a message indicating that the data processing task is completed to the first application as a third event message. Specifically, first, the third event message is sent to the event proxy, and the event proxy processes the third event message, that is, translates the third event message. The third event message includes a specific event file descriptor (eventfd), and the event proxy determines, based on the event file descriptor, a corresponding driver interface (namely, content of the fourth event message) of a driver running in the operating system of the compute card, to simulate an operation on the file descriptor, thereby realizing message transmission.

Step S206: send the fourth event message to a driver backend running in the operating system of the compute card, to send the execution result to the first application.

Then, the fourth event message generated after processing of the event proxy is sent to the driver backend. The driver backend calls a corresponding driver interface based on content in the fourth event message, to forward the message to the driver frontend, that is, a side of the operating system of the host. Then, the operating system of the host delivers the message to the first application, to achieve message sending between the second application and the first application.

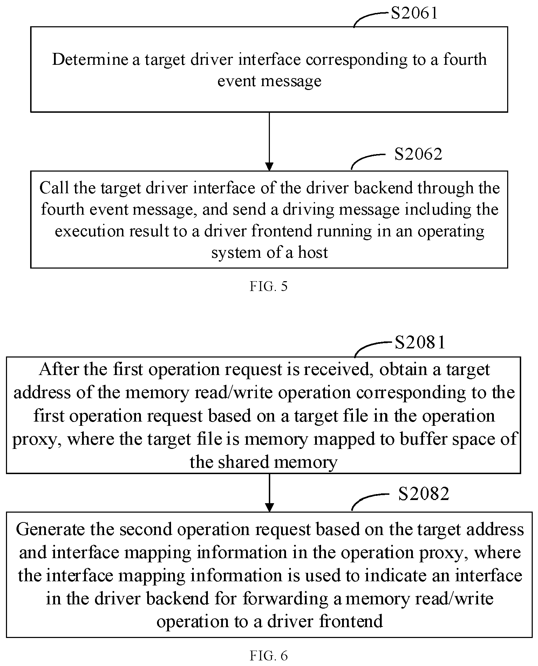

Further, exemplarily, as shown in FIG. 5, a specific implementation of step S206 includes the following steps.

Step S2061: determine a target driver interface corresponding to the fourth event message.

Step S2062: call the target driver interface of the driver backend through the fourth event message, and send a driving message including the execution result to a driver frontend running in the operating system of the host.

Exemplarily, the fourth event message obtained after translation includes an interface identifier corresponding to the target driver interface. The event proxy is a program generated based on designs for different compute cards. Therefore, the event proxy running in the operating system of the compute card has an ability to convert an event file descriptor into corresponding target driver interfaces for different compute cards, which is equivalent to completing adaptation between the virtualized device and the compute card (DUP chip) through the event proxy, thereby avoiding modification of the virtualized device. Then, the driver backend calls the corresponding target driver interface by executing the fourth event message, and sends a driving message including the execution result to the driver frontend running in the operating system of the host. Then, the host obtains the driving message through the driver frontend, and synchronizes the execution result to the first application by using the driving message, to complete a process in which the second application returns the execution result to the first application.

Further, in the foregoing steps, the target driver interface is a blocking direct memory access (DMA) interface; and a specific implementation of step S2062 includes: calling the blocking direct memory access interface of the driver backend through the fourth event message, and sending, based on a ping-pong communication mechanism, the driving message including the execution result to the driver frontend.

Specifically, in a virtualization technology scenario, a ping-pong communication mechanism may be simulated by using the blocking DMA interface, to simulate an implementation process of an operation of an eventfd. The blocking DMA interface is a method used in a context of virtual machine technology, and is mainly used to solve a problem of data transmission between a virtual machine and a physical device. A function of the blocking DMA interface may also be used to realize data transmission and synchronization between a device and the virtual machine. After the virtual machine executes a DMA request, virtualization software blocks a corresponding virtual machine thread until the DMA operation is completed. This can ensure that the virtual machine can obtain a result of the completed DMA operation before continuing to execute, to avoid an error or inconsistency in data transmission. A specific function and simulation logic of the DMA interface may be recorded in the event proxy in advance. When an event needs to be notified between the second application and the first application, the compute card sends a ping event to the host, and the host returns a pong event to the compute card after receiving the ping event. In this way, simulation of the ping-pong communication mechanism is completed.

Further, the method of this embodiment further includes:
step S207: send a first operation request to an operation proxy through the virtualized device, where the first operation request is used to request a memory read/write operation for a shared memory of the second application and the first application.
step S208: process the first operation request through the operation proxy to generate a second operation request, where the second operation request is used to call a driver backend running in the operating system of the compute card.

Exemplarily, in addition to optimizing the event notification mechanism, in this embodiment, a memory read/write mechanism in an application scenario in which the virtualized device is offloaded by the compute card is also optimized. Specifically, when the first operation request is sent through the virtualized device, the first operation request is sent to the operation proxy. The first operation request is used to request the memory read/write operation for the shared memory of the second application and the first application, for example, to acquire data from or write data into the shared memory. A function of the operation proxy is similar to that of the event proxy, and is also used to translate the first operation request, so that the memory read/write operation represented by the first operation request can be correctly executed on the side of the host. Specifically, after obtaining the first operation request, the operation proxy processes the first operation request to generate the second operation request for calling a corresponding interface of the driver backend running in the operating system of the compute card, so that specific content in the operation request is delivered to the side of the host.

Because a file descriptor output by the virtualized device cannot be directly identified by the driver of the compute card, transmission of an operation request between the virtualized device and the driver of the compute card is blocked. In this embodiment, the first operation request including an mmap file descriptor and sent by the virtualized device is converted by the operation proxy into the second operation request that can be identified by the driver backend of the compute card, in this way, calling of a target driver interface of the driver backend is realized, and an objective of forwarding a memory read/write operation instruction for execution in the host is achieved.

Further, exemplarily, as shown in FIG. 6, a specific implementation of step S208 includes the following steps.

Step S2081: after the first operation request is received, obtain a target address of the memory read/write operation corresponding to the first operation request based on a target file in the operation proxy, where the target file is memory mapped to buffer space of the shared memory.

Step S2082: generate the second operation request based on the target address and interface mapping information in the operation proxy, where the interface mapping information is used to indicate an interface in the driver backend for forwarding a memory read/write operation to a driver frontend.

Exemplarily, a target file is preset in the operation proxy, and the target file is mapped to buffer space of the shared memory. After the first operation request for reading from or writing to the buffer space of the shared memory is received, a target address of the memory read/write operation corresponding to the first operation request may be determined by detecting the target file. Then, an interface in the driver backend for forwarding a memory read/write operation to a driver frontend is determined based on interface mapping information recorded in the operation proxy, and then the second operation request is generated.

More specifically, for example, the operation proxy includes a file system. When the shared memory is used, the operation proxy can directly open (open) a file under a file system, and memory map (mmap) the file to a memory space (hereinafter referred to as an mmap buffer). Then, any memory read/write operation on the mmap buffer can be captured by the file system of the operation proxy. In the operation proxy, a corresponding memory read/write operation is forwarded to a side of the host by calling an interface of the DMA driver backend, to complete forwarding of one memory read/write operation.

Step S209: process the second operation request through the driver backend, so that the operating system of the host performs the memory read/write operation for the shared memory.

Exemplarily, after obtaining the second operation request, the driver backend calls a driver interface recorded in the second operation request, to forward a memory read/write operation corresponding to the first operation request to a driver frontend in an operating system of a host, and then the driver frontend forwards the memory read/write operation to a corresponding process in the host to complete the memory read/write operation.

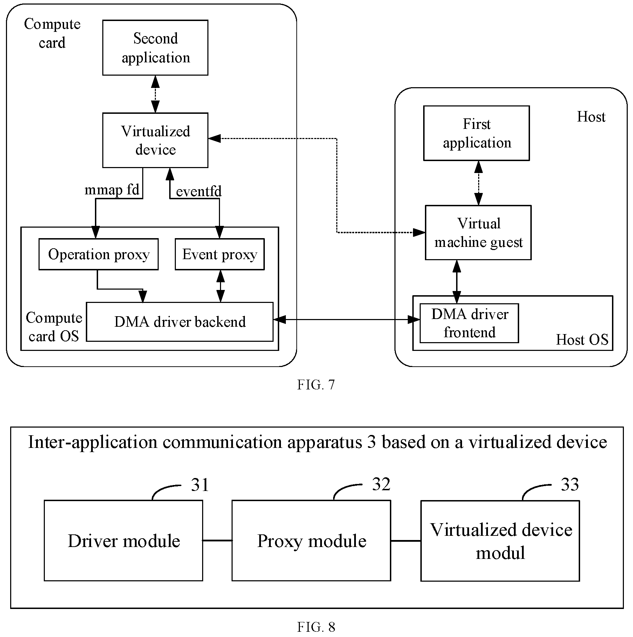

FIG. 7 is a schematic diagram of a process of communication based on a virtualized device provided by an embodiment of the present disclosure. The foregoing process is further described below with reference to FIG. 7. As shown in FIG. 7, exemplarily, a virtual machine guest is running on an operating system of a host (shown as a host OS in the figure), and a first application is running on the virtual machine guest. A DMA driver frontend is running on a side of the operating system of the host. A virtualized device, an event proxy, an operation proxy, and a DMA driver backend are running on an operating system of a compute card (shown as a compute card OS in the figure), where the DMA driver backend communicates with the DMA driver frontend through a DMA protocol, the event proxy is configured to implement event notification between the virtualized device and the DMA driver backend by translating an event file descriptor (shown as an eventfd in the figure), and the operation proxy is configured to implement a memory read/write operation between the virtualized device and the DMA driver backend by translating a memory mapped file descriptor (shown as an mmap fd in the figure). A specific connection relationship is shown in the figure. In this embodiment, the event proxy and the operation proxy are running in the operating system of the compute card, to realize event notification and forwarding of a memory read/write operation instruction between the DMA driver backend in the compute card and the virtualized setting, and further realize communication between the first application and the second application. In this way, different compute cards can all complete adaptation to virtualized devices without changing the code of the virtualized devices, thereby improving the stability of the virtual machine system and reducing the costs of use and maintenance.

Corresponding to the inter-application communication method based on a virtualized device in the foregoing embodiments, FIG. 8 is a structural block diagram of an inter-application communication apparatus based on a virtualized device provided by an embodiment of the present disclosure. For ease of description, only parts related to the embodiments of the present disclosure are shown. With reference to FIG. 8, an inter-application communication apparatus 3 based on a virtualized device includes:
a driver module 31, configured to receive a first event message sent by a first application running in an operating system of a host, where the first event message is used to request a second application running in an operating system of a compute card to perform a target function, and the operating system of the host communicates with the operating system of the compute card through a driver;
a proxy module 32, configured to process the first event message through an event proxy to generate a second event message including an event file descriptor, where the event proxy is configured to implement bidirectional mapping between the event file descriptor and the driver, and the event file descriptor is used to implement communication between the first application and the second application based on the virtualized device; and
a virtualized device module 33, configured to send the second event message to the virtualized device, so that the virtualized device establishes the communication between the first application and the second application, and the second application performs the target function corresponding to the first event message.

According to one or more embodiments of the present disclosure, the driver module 31 is specifically configured to: receive, through a driver backend running in the operating system of the compute card, the first event message sent by a driver frontend running in the operating system of the host; and the proxy module 32 is specifically configured to: send, through the driver backend, an event notification message corresponding to the first event message to the event proxy; generate a target event file descriptor applied to the virtualized device after the event proxy receives the event notification message; and generate the second event message based on the target event file descriptor.

According to one or more embodiments of the present disclosure, the virtualized device is implemented based on an independent user-mode process running in the operating system of the host.

According to one or more embodiments of the present disclosure, the virtualized device module 33 is further configured to: acquire a third event message sent by the second application, where the third event message represents an execution result of the target function; the proxy module 32 is further configured to: process the third event message through the proxy to generate a fourth event message; and the driver module 31 is further configured to: send the fourth event message to a driver backend running in the operating system of the compute card, to send the execution result to the first application.

According to one or more embodiments of the present disclosure, when sending the fourth event message to the driver backend running in the operating system of the compute card to send the execution result to the first application, the driver module 31 is specifically configured to: call a target driver interface of the driver backend through the fourth event message, and send a driving message including the execution result to a driver frontend running in the operating system of the host, so that the driver frontend returns the execution result to the first application.

According to one or more embodiments of the present disclosure, the target driver interface is a blocking direct memory access interface; and when calling the target driver interface of the driver backend through the fourth event message and sending the driving message including the execution result to the driver frontend running in the operating system of the host, the driver module 31 is specifically configured to: call the blocking direct memory access interface of the driver backend through the fourth event message, and send, based on a ping-pong communication mechanism, the driving message including the execution result to the driver frontend.

According to one or more embodiments of the present disclosure, the virtualized device module 33 is further configured to: send a first operation request to an operation proxy through the virtualized device, where the first operation request is used to request a memory read/write operation for a shared memory of the second application and the first application; the proxy module 32 is further configured to: process the first operation request through the operation proxy to generate a second operation request, where the second operation request is used to call a driver backend running in the operating system of the compute card; and the driver module 31 is further configured to: process the second operation request through the driver backend, so that the operating system of the host performs the memory read/write operation for the shared memory.

According to one or more embodiments of the present disclosure, when processing the first operation request through the operation proxy to generate the second operation request, the proxy module 32 is specifically configured to: after the first operation request is received, obtain a target address of the memory read/write operation corresponding to the first operation request based on a target file in the operation proxy, where the target file is memory mapped to buffer space of the shared memory; and generate the second operation request based on the target address and interface mapping information in the operation proxy, where the interface mapping information is used to indicate an interface in the driver backend for forwarding a memory read/write operation to a driver frontend.

The driver module 31, the proxy module 32, and the virtualized device module 33 are connected in sequence. The inter-application communication apparatus 3 based on a virtualized device provided in this embodiment may execute the technical solution of the method embodiments. The implementation principle and technical effects are similar, and are not described here again in this embodiment.

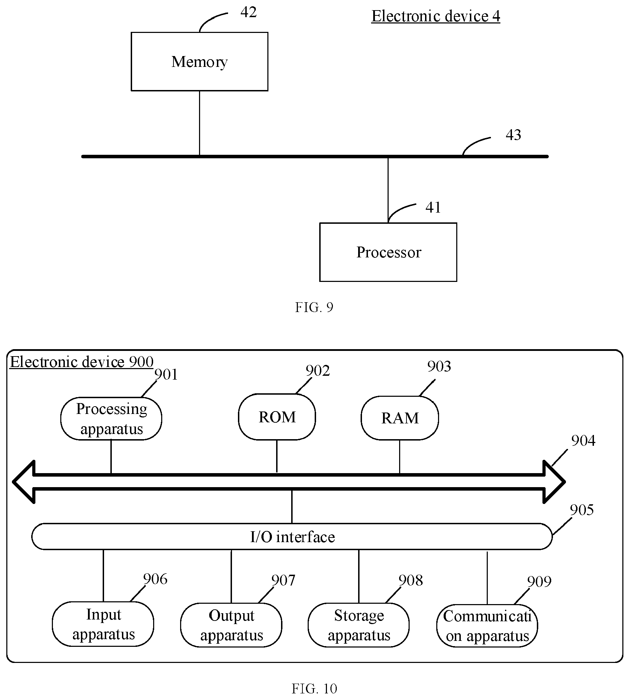

FIG. 9 is a structural schematic diagram of an electronic device provided by an embodiment of the present disclosure. As shown in FIG. 9, the electronic device 4 includes:
a processor 41 and a memory 42 communicatively connected to the processor 41;
the memory 42 stores a computer-executable instruction; and
the processor 41 executes the computer-executable instruction stored in the memory 42, to implement the inter-application communication method based on a virtualized device in the embodiment shown in FIG. 2 to FIG. 7.

Optionally, the processor 41 and the memory 42 are connected through a bus 43.

For related descriptions, reference may be made to related descriptions and effects corresponding to the steps in the embodiments corresponding to FIG. 2 to FIG. 7 for understanding, which are not described here again.

An embodiment of the present disclosure provides a computer-readable storage medium. The computer-readable storage medium stores a computer-executable instruction, and when the computer-executable instruction is executed by a processor, the inter-application communication method based on a virtualized device provided in any one of the embodiments corresponding to FIG. 2 to FIG. 7 of the present disclosure is implemented.

An embodiment of the present disclosure provides a computer program product, including a computer program, when the computer program is executed by a processor, the inter-application communication method based on a virtualized device provided in any one of the embodiments corresponding to FIG. 2 to FIG. 7 of the present disclosure is implemented.

To implement the foregoing embodiments, an embodiment of the present disclosure further provides an electronic device.

With reference to FIG. 10, FIG. 10 is a schematic diagram of a structure of an electronic device 900 suitable for implementing the embodiments of the present disclosure. The electronic device 900 may be a terminal device or a server. The terminal device may include, but is not limited to, mobile terminals such as a mobile phone, a notebook computer, a digital broadcast receiver, a personal digital assistant (PDA for short), a tablet computer (Portable Android Device, PAD for short), a portable multimedia player (PMP for short) or a vehicle-mounted terminal (such as a vehicle navigation terminal), or fixed terminals such as a digital TV or a desktop computer. The electronic device shown in FIG. 10 is merely an example, and shall not impose any limitation on the function and scope of use of the embodiments of the present disclosure.

As shown in FIG. 10, the electronic device 900 may include a processing apparatus (for example, a central processing unit, a graphics processing unit, etc.) 901 that may perform a variety of appropriate actions and processing in accordance with a program stored in a read-only memory (ROM for short) 902 or a program loaded from a storage apparatus 908 into a random access memory (RAM for short) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Generally, the following apparatuses may be connected to the I/O interface 905: an input apparatus 906 including, for example, a touch screen, a touchpad, a keyboard, a mouse, a camera, a microphone, an accelerometer or a gyroscope; an output apparatus 907 including, for example, a liquid crystal display (LCD for short), a speaker or a vibrator; the storage apparatus 908 including, for example, a tape or a hard disk; and a communication apparatus 909. The communication apparatus 909 may allow the electronic device 900 to perform wireless or wired communication with other devices to exchange data. Although FIG. 10 shows the electronic device 900 having various apparatuses, it should be understood that it is not required to implement or have all of the shown apparatuses. It is possible to implement or have more or fewer apparatuses alternatively.

In particular, according to an embodiment of the present disclosure, the process described above with reference to the flowcharts may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded from a network through the communication apparatus 909, or installed from the storage apparatus 908, or installed from the ROM 902. When the computer program is executed by the processing apparatus 901, the above-mentioned functions defined in the method of the embodiments of the present disclosure are executed.

It should be noted that the above computer-readable medium described in the present disclosure may be a computer-readable signal medium, a computer-readable storage medium, or any combination thereof. The computer-readable storage medium may be, for example, but not limited to, electricity, magnetism, light, an electromagnetic wave, an infrared ray, or a semiconductor system, apparatus, or device, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, RF (radio frequency), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiments.

The computer program code for performing the operations in the present disclosure may be written in one or more programming languages or a combination thereof, where the programming languages include an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving the remote computer, the remote computer may be connected to the computer of the user through any type of network, including a local area network (LAN for short) or a wide area network (WAN for short), or may be connected to an external computer (for example, connected through the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be executed substantially in parallel, or they can sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units or modules described in the embodiments of the present disclosure may be implemented by software, or may be implemented by hardware. The name of a unit or module does not constitute a limitation on the unit itself in some cases.

The functions described herein above may be performed, at least in part, by one or more hardware logic components. For example, without limitation, exemplary types of hardware logic components that may be used include: a field programmable gate array (FPGA), an application-specific integrated circuit (ASIC), an application-specific standard product (ASSP), a system-on-chip system (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In a first aspect, according to one or more embodiments of the present disclosure, there is provided an inter-application communication method based on a virtualized device, including:
receiving a first event message sent by a first application running in an operating system of a host, where the first event message is used to request a second application running in an operating system of a compute card to perform a target function, and the operating system of the host communicates with the operating system of the compute card through a driver; processing the first event message through an event proxy to generate a second event message including an event file descriptor, where the event proxy is configured to implement bidirectional mapping between the event file descriptor and the driver, and the event file descriptor is used to implement communication between the first application and the second application based on the virtualized device; and sending the second event message to the virtualized device, where the virtualized device establishes the communication between the first application and the second application, so that the second application performs the target function corresponding to the first event message.

According to one or more embodiments of the present disclosure, the receiving a first event message sent by a first application running in an operating system of a host includes: receiving, through a driver backend running in the operating system of the compute card, the first event message sent by a driver frontend running in the operating system of the host; and the processing the first event message through an event proxy to generate a second event message including an event file descriptor includes: sending, through the driver backend, an event notification message corresponding to the first event message to the event proxy; generating a target event file descriptor applied to the virtualized device after the event proxy receives the event notification message; and generating the second event message based on the target event file descriptor.

According to one or more embodiments of the present disclosure, the virtualized device is implemented based on an independent user-mode process running in the operating system of the host.

According to one or more embodiments of the present disclosure, the method further includes: acquiring a third event message sent by the second application, where the third event message represents an execution result of the target function; processing the third event message through the proxy to generate a fourth event message; and sending the fourth event message to a driver backend running in the operating system of the compute card, to send the execution result to the first application.

According to one or more embodiments of the present disclosure, the sending the fourth event message to the driver backend running in the operating system of the compute card to send the execution result to the first application includes: calling a target driver interface of the driver backend through the fourth event message, and sending a driving message including the execution result to a driver frontend running in the operating system of the host, so that the driver frontend returns the execution result to the first application.

According to one or more embodiments of the present disclosure, the target driver interface is a blocking direct memory access interface; and the calling a target driver interface of the driver backend through the fourth event message, and sending a driving message including the execution result to a driver frontend running in the operating system of the host includes: calling the blocking direct memory access interface of the driver backend through the fourth event message, and sending, based on a ping-pong communication mechanism, the driving message including the execution result to the driver frontend.

According to one or more embodiments of the present disclosure, the method further includes: sending a first operation request to an operation proxy through the virtualized device, where the first operation request is used to request a memory read/write operation for a shared memory of the second application and the first application; processing the first operation request through the operation proxy to generate a second operation request, where the second operation request is used to call a driver backend running in the operating system of the compute card; and processing the second operation request through the driver backend, so that the operating system of the host performs the memory read/write operation for the shared memory.

According to one or more embodiments of the present disclosure, the processing the first operation request through the operation proxy to generate the second operation request includes: after the first operation request is received, obtaining a target address of the memory read/write operation corresponding to the first operation request based on a target file in the operation proxy, where the target file is memory mapped to buffer space of the shared memory; and generating the second operation request based on the target address and interface mapping information in the operation proxy, where the interface mapping information is used to indicate an interface in the driver backend for forwarding a memory read/write operation to a driver frontend.

In a second aspect, according to one or more embodiments of the present disclosure, there is provided an inter-application communication apparatus based on a virtualized device, including:
a driver module, configured to receive a first event message sent by a first application running in an operating system of a host, where the first event message is used to request a second application running in an operating system of a compute card to perform a target function, the first application communicates with the second application through a virtualized device, and the operating system of the host communicates with the operating system of the compute card through a driver;
a proxy module, configured to process the first event message through an event proxy to generate a second event message including an event file descriptor, where the event proxy is configured to implement bidirectional mapping between the event file descriptor and the driver, and the event file descriptor is used to implement communication between the first application and the second application based on the virtualized device; and
a virtualized device module, configured to send the second event message to the virtualized device, so that the virtualized device establishes the communication between the first application and the second application, so that the second application performs the target function corresponding to the first event message.

According to one or more embodiments of the present disclosure, the driver module is specifically configured to: receive, through a driver backend running in the operating system of the compute card, the first event message sent by a driver frontend running in the operating system of the host; and the proxy module is specifically configured to: send, through the driver backend, an event notification message corresponding to the first event message to the event proxy; generate a target event file descriptor applied to the virtualized device after the event proxy receives the event notification message; and generate the second event message based on the target event file descriptor.

According to one or more embodiments of the present disclosure, the virtualized device is implemented based on an independent user-mode process running in the operating system of the host.

According to one or more embodiments of the present disclosure, the virtualized device module is further configured to: acquire a third event message sent by the second application, where the third event message represents an execution result of the target function; the proxy module is further configured to: process the third event message through the event proxy to generate a fourth event message; and the driver module is further configured to: send the fourth event message to a driver backend running in the operating system of the compute card, to send the execution result to the first application.

According to one or more embodiments of the present disclosure, when sending the fourth event message to the driver backend running in the operating system of the compute card to send the execution result to the first application, the driver module is specifically configured to: call a target driver interface of the driver backend through the fourth event message, and send a driving message including the execution result to a driver frontend running in the operating system of the host, so that the driver frontend returns the execution result to the first application.

According to one or more embodiments of the present disclosure, the target driver interface is a blocking direct memory access interface; and when calling the target driver interface of the driver backend through the fourth event message and sending the driving message including the execution result to the driver frontend running in the operating system of the host, the driver module is specifically configured to: call the blocking direct memory access interface of the driver backend through the fourth event message, and send, based on a ping-pong communication mechanism, the driving message including the execution result to the driver frontend.

According to one or more embodiments of the present disclosure, the virtualized device module is further configured to: send a first operation request to an operation proxy through the virtualized device, where the first operation request is used to request a memory read/write operation for a shared memory of the second application and the first application; the proxy module is further configured to: process the first operation request through the operation proxy to generate a second operation request, where the second operation request is used to call a driver backend running in the operating system of the compute card; and the driver module is further configured to: process the second operation request through the driver backend, so that the operating system of the host performs the memory read/write operation for the shared memory.

According to one or more embodiments of the present disclosure, when processing the first operation request through the operation proxy to generate the second operation request, the proxy module is specifically configured to: after the first operation request is received, obtain a target address of the memory read/write operation corresponding to the first operation request based on a target file in the operation proxy, where the target file is memory mapped to buffer space of the shared memory; and generate the second operation request based on the target address and interface mapping information in the operation proxy, where the interface mapping information is used to indicate an interface in the driver backend for forwarding a memory read/write operation to a driver frontend.

In a third aspect, according to one or more embodiments of the present disclosure, there is provided an electronic device, including: at least one processor and a memory;
the memory stores a computer-executable instruction; and
the at least one processor executes the computer-executable instruction stored in the memory, so that the at least one processor executes the inter-application communication method based on a virtualized device according to the first aspect and various possible designs of the first aspect.

In a fourth aspect, according to one or more embodiments of the present disclosure, there is provided a computer-readable storage medium storing a computer-executable instruction, where when a processor executes the computer-executable instruction, the inter-application communication method based on a virtualized device according to the first aspect and various possible designs of the first aspect is implemented.

In a fifth aspect, according to one or more embodiments of the present disclosure, there is provided a computer program product including a computer program, when the computer program is executed by a processor, the inter-application communication method based on a virtualized device according to the first aspect and various possible designs of the first aspect is implemented.

The foregoing descriptions are merely preferred embodiments of the present disclosure and explanations of the applied technical principles. Persons skilled in the art should understand that the scope of disclosure involved in the present disclosure is not limited to the technical solution formed by a specific combination of the foregoing technical features, and shall also cover other technical solutions formed by any combination of the foregoing technical features or equivalent features thereof without departing from the foregoing concept of disclosure. For example, a technical solution formed by replacing the foregoing features with technical features having similar functions disclosed in the present disclosure (but not limited thereto).

In addition, although various operations are depicted in a specific order, it should not be construed as requiring these operations to be performed in the specific order shown or in a sequential order. Under specific circumstances, multitasking and parallel processing may be advantageous. Similarly, although several specific implementation details are contained in the foregoing discussions, these details should not be construed as limiting the scope of the present disclosure. Some features that are described in the context of separate embodiments can also be implemented in combination in a single embodiment. In contrast, various features described in the context of a single embodiment can also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are merely exemplary forms for implementing the claims.

## Claims

1. An inter-application communication method based on a virtualized device running in an operating system of a compute card, comprising:
receiving (S101, S201) a first event message sent by a first application running in an operating system of a host, wherein the first event message is used to request a second application running in the operating system of the compute card to perform a target function, and the operating system of the host communicates with the operating system of the compute card through a driver frontend running in the operating system of the host and a driver backend running in the operating system of the compute card;
processing (S102, S202) the first event message through an event proxy running in the operating system of the compute card to generate a second event message comprising an event file descriptor, wherein the event proxy is configured to implement bidirectional mapping between the event file descriptor and the driver backend running in the operating system of the compute card, and the event file descriptor is used to implement communication between the first application and the second application based on the virtualized device; and
sending (S103, S203) the second event message to the virtualized device, and establishing the communication between the first application and the second application using the event file descriptor through the virtualized device, so that the second application performs the target function corresponding to the first event message;
wherein the receiving (S101, S201) a first event message sent by a first application running in an operating system of a host comprises:
receiving, through the driver backend running in the operating system of the compute card, the first event message sent by the driver frontend running in the operating system of the host;
the processing (S102, S202) the first event message through an event proxy running in the operating system of the compute card to generate a second event message comprising an event file descriptor comprises:
sending (S1021), through the driver backend, an event notification message corresponding to the first event message to the event proxy;
generating (S1022) a target event file descriptor applied to the virtualized device after the event proxy receives the event notification message; and
generating (S1023) the second event message based on the target event file descriptor.

2. The method according to claim 1, wherein the virtualized device is a vhost-user device.

3. The method according to claim 1 or 2, wherein the method further comprises:
acquiring (S204) a third event message sent by the second application through the event proxy, wherein the third event message represents an execution result of the target function;
processing (S205) the third event message through the event proxy to generate a fourth event message; and
sending (S206) the fourth event message through the event proxy to the driver backend running in the operating system of the compute card, to send the execution result to the first application.

4. The method according to claim 3, wherein the sending (S206) the fourth event message through the event proxy to the driver backend running in the operating system of the compute card, to send the execution result to the first application comprises:
calling (S2062), through the driver backend, a target driver interface of the driver backend through the fourth event message, and sending (S2062) a driving message comprising the execution result through the driver backend to the driver frontend running in the operating system of the host, so that the driver frontend returns the execution result to the first application.

5. The method according to claim 4, wherein the target driver interface is a blocking direct memory access interface; and
the calling (S2062), through the driver backend, a target driver interface of the driver backend through the fourth event message, and sending (S2062) a driving message comprising the execution result through the driver backend to the driver frontend running in the operating system of the host comprises:
calling the blocking direct memory access interface of the driver backend through the fourth event message, and sending, based on a ping-pong communication mechanism, the driving message comprising the execution result to the driver frontend.

6. The method according to any one of claims 1 to 5, wherein the method further comprises:
sending (S207) a first operation request to an operation proxy running in the operating system of the compute card through the virtualized device, wherein the first operation request is used to request a memory read/write operation for a shared memory of the second application and the first application;
processing (S208) the first operation request through the operation proxy to generate a second operation request, wherein the second operation request is used to call the driver backend running in the operating system of the compute card; and
processing (S209) the second operation request through the driver backend, so that the operating system of the host performs the memory read/write operation for the shared memory.

7. The method according to claim 6, wherein the processing (S208) the first operation request through the operation proxy to generate a second operation request comprises:
obtaining (S2081), after the first operation request is received, a target address of the memory read/write operation corresponding to the first operation request based on a target file in the operation proxy, wherein the target file is memory mapped to buffer space of the shared memory; and
generating (52082) the second operation request based on the target address and interface mapping information in the operation proxy, wherein the interface mapping information is used to indicate an interface in the driver backend for forwarding a memory read/write operation to the driver frontend.

8. A compute card, comprising a virtualized device, an event proxy, an operation proxy, and a driver backend that run on an operating system of the compute card;
the driver backend is configured to receive a first event message sent by a first application running in an operating system of a host, wherein the first event message is used to request a second application running in the operating system of the compute card to perform a target function, and the operating system of the host communicates with the operating system of the compute card through a driver frontend running in the operating system of the host and the driver backend running in the operating system of the compute card;
the event proxy is configured to process the first event message to generate a second event message comprising an event file descriptor, and implement bidirectional mapping between the event file descriptor and the driver backend running in the operating system of the compute card, wherein the event file descriptor is used to implement communication between the first application and the second application based on the virtualized device; and
the virtualized device is configured to receive the second event message generated by the event proxy, and establish the communication between the first application and the second application using the event file descriptor, so that the second application performs the target function corresponding to the first event message;
wherein the driver backend is specifically configured to:
receive the first event message sent by the driver frontend running in the operating system of the host, and send an event notification message corresponding to the first event message to the event proxy;
wherein the event proxy is specifically configured to:
receive the event notification message corresponding to the first event message sent by the driver backend;
generate a target event file descriptor applied to the virtualized device after receiving the event notification message; and
generate the second event message based on the target event file descriptor.

9. The compute card according to claim 8, wherein the virtualized device is a vhost-user device.

10. The compute card according to claim 8 or 9, wherein the event proxy is further configured to: acquire a third event message sent by the second application, wherein the third event message represents an execution result of the target function;
the event proxy is further configured to: process the third event message to generate a fourth event message; and
the event proxy is further configured to: send the fourth event message to the driver backend running in the operating system of the compute card to send the execution result to the first application.

11. The compute card according to claim 10, wherein the driver backend is specifically configured to:
call a target driver interface of the driver backend through the fourth event message, and send a driving message comprising the execution result to the driver frontend running in the operating system of the host, so that the driver frontend returns the execution result to the first application.

12. The compute card according to claim 11, wherein the target driver interface is a blocking direct memory access interface; and
the driver backend is specifically configured to:
call the blocking direct memory access interface of the driver backend through the fourth event message, and send, based on a ping-pong communication mechanism, the driving message comprising the execution result to the driver frontend.

## Patentansprüche

1. Kommunikationsverfahren zwischen Anwendungen basierend auf einer virtualisierten Vorrichtung, die in einem Betriebssystem einer Rechenkarte ausgeführt wird, umfassend:
Empfangen (S101, S201) einer ersten Ereignisnachricht, die von einer ersten Anwendung gesendet wird, die in einem Betriebssystem eines Hosts ausgeführt wird, wobei die erste Ereignisnachricht verwendet wird, eine zweite Anwendung, die im Betriebssystem der Rechenkarte ausgeführt wird, aufzufordern, eine Zielfunktion durchzuführen, und das Betriebssystem des Hosts mit dem Betriebssystem der Rechenkarte über ein Treiber-Frontend, das im Betriebssystem des Hosts ausgeführt wird, und ein Treiber-Backend kommuniziert, das im Betriebssystem der Rechenkarte ausgeführt wird;
Verarbeiten (S102, S202) der ersten Ereignisnachricht durch einen im Betriebssystem der Rechenkarte ausgeführten Ereignisproxy zur Erzeugung einer zweiten Ereignisnachricht, die einen Ereignisdateideskriptor umfasst, wobei der Ereignisproxy so konfiguriert ist, dass er eine bidirektionale Abbildung zwischen dem Ereignisdateideskriptor und dem im Betriebssystem der Rechenkarte ausgeführten Treiber-Backend implementiert, und der Ereignisdateideskriptor zur Implementierung der Kommunikation zwischen der ersten Anwendung und der zweiten Anwendung auf Basis der virtualisierten Vorrichtung verwendet wird; und
Senden (S103, S203) der zweiten Ereignisnachricht an die virtualisierte Vorrichtung und Herstellen der Kommunikation zwischen der ersten Anwendung und der zweiten Anwendung unter Verwendung des Ereignisdateideskriptors durch die virtualisierte Vorrichtung, damit die zweite Anwendung die der ersten Ereignisnachricht entsprechende Zielfunktion durchführt;
wobei das Empfangen (S101, S201) einer ersten Ereignisnachricht, die von einer ersten auf einem Betriebssystem eines Hosts ausgeführten Anwendung gesendet wird, Folgendes umfasst:
Empfangen der ersten Ereignisnachricht, die vom Treiber-Frontend, das im Betriebssystem des Hosts ausgeführt wird, gesendet wird, über das Treiber-Backend, das im Betriebssystem der Rechenkarte ausgeführt wird;
wobei das Verarbeiten (S102, S202) der ersten Ereignisnachricht durch einen im Betriebssystem der Rechenkarte ausgeführten Ereignisproxy zur Erzeugung einer zweiten Ereignisnachricht, die einen Ereignisdateideskriptor umfasst, umfasst:
Senden (S1021) über das Treiber-Backend, einer Ereignisbenachrichtigungsnachricht, die der ersten Ereignisnachricht entspricht, an den Ereignisproxy;
Erzeugen (S1022) eines Zielereignisdateideskriptors, der auf die virtualisierte Vorrichtung angewendet wird, nachdem der Ereignisproxy die Ereignisbenachrichtigungsnachricht empfangen hat; und
Erzeugen (S1023) der zweiten Ereignisnachricht basierend auf dem Zielereignisdateideskriptor.

2. Verfahren nach Anspruch 1, wobei es sich bei der virtualisierten Vorrichtung um eine vhost-user-Vorrichtung handelt.

3. Verfahren nach Anspruch 1 oder 2, wobei das Verfahren ferner Folgendes umfasst:
Erhalten (S204) einer dritten Ereignisnachricht, die von der zweiten Anwendung über den Ereignisproxy gesendet wird, wobei die dritte Ereignisnachricht ein Ausführungsergebnis der Zielfunktion darstellt;
Verarbeiten (S205) der dritten Ereignisnachricht über den Ereignisproxy zur Erzeugung einer vierten Ereignisnachricht; und
Senden (S206) der vierten Ereignisnachricht über den Ereignisproxy an das Treiber-Backend, das im Betriebssystem der Rechenkarte ausgeführt wird, um das Ausführungsergebnis an die erste Anwendung zu senden.

4. Verfahren nach Anspruch 3, wobei das Senden (S206) der vierten Ereignisnachricht über den Ereignisproxy an das im Betriebssystem der Rechenkarte ausgeführte Treiber-Backend, um das Ausführungsergebnis an die erste Anwendung zu senden, Folgendes umfasst:
Aufrufen (S2062) über das Treiber-Backend, einer Zieltreiberschnittstelle des Treiber-Backends über die vierte Ereignisnachricht, und Senden (S2062) einer Treibernachricht, die das Ausführungsergebnis umfasst, über das Treiber-Backend an das Treiber-Frontend, das im Betriebssystem des Hosts ausgeführt wird, sodass das Treiber-Frontend das Ausführungsergebnis an die erste Anwendung zurückgibt.

5. Verfahren nach Anspruch 4, wobei es sich bei der Zieltreiberschnittstelle um eine blockierende Direct-Memory-Access-Schnittstelle handelt; und
das Aufrufen (S2062) über das Treiber-Backend einer Zieltreiberschnittstelle des Treiber-Backends über die vierte Ereignisnachricht und das Senden (S2062) einer Treibernachricht, die das Ausführungsergebnis umfasst, über das Treiber-Backend, an das im Betriebssystem des Hosts ausgeführte Treiber-Frontend umfasst:
Aufrufen der blockierenden Direct-Memory-Access-Schnittstelle des Treiber-Backends über die vierte Ereignisnachricht und Senden der das Ausführungsergebnis umfassenden Treibernachricht an das Treiber-Frontend basierend auf einen Ping-Pong-Kommunikationsmechanismus.

6. Verfahren nach einem der Ansprüche 1 bis 5, wobei das Verfahren ferner umfasst:
Senden (S207) einer ersten Operationsanforderung an einen im Betriebssystem der Rechenkarte über die virtualisierte Vorrichtung ausgeführten Operationsproxy, wobei die erste Operationsanforderung zum Anfordern einer Speicher-Lese/Schreibe-Operation für einen gemeinsamen Speicher der zweiten Anwendung und der ersten Anwendung verwendet wird;
Verarbeiten (S208) der ersten Operationsanforderung über den Operationsproxy zur Erzeugung einer zweiten Operationsanforderung, wobei die zweite Operationsanforderung zum Aufrufen des im Betriebssystem der Rechenkarte ausgeführten Treiber-Backends verwendet wird; und
Verarbeiten (S209) der zweiten Operationsanforderung über das Treiber-Backend, sodass das Betriebssystem des Hosts die Speicher-Lese/Schreibe-Operation für den gemeinsam genutzten Speicher durchführt.

7. Verfahren nach Anspruch 6, wobei das Verarbeiten (S208) der ersten Operationsanforderung über den Operationsproxy zur Erzeugung einer zweiten Operationsanforderung Folgendes umfasst:
Erhalten (S2081), nach dem Empfang der ersten Operationsanforderung, einer Zieladresse der Speicher-Lese/Schreibe-Operation, die der ersten Operationsanforderung basierend auf einer Zieldatei im Operationsproxy entspricht, wobei die Zieldatei auf einen Pufferbereich des gemeinsam genutzten Speichers speicherabgebildet ist; und
Erzeugen (S2082) der zweiten Operationsanforderung basierend auf der Zieladresse und den Schnittstellenabbildungsinformationen im Operationsproxy, wobei die Schnittstellenabbildungsinformationen verwendet werden, um eine Schnittstelle im Treiber-Backend für die Weiterleitung einer Speicher-Lese/Schreibe-Operation an das Treiber-Frontend anzugeben.

8. Rechenkarte, umfassend eine virtualisierte Vorrichtung, einen Ereignisproxy, einen Operationsproxy und ein Treiber-Backend, die auf einem Betriebssystem der Rechenkarte ausgeführt werden;
das Treiber-Backend so konfiguriert ist, dass es eine erste Ereignisnachricht empfängt, die von einer ersten Anwendung gesendet wird, die in einem Betriebssystem eines Hosts ausgeführt wird, wobei die erste Ereignisnachricht dazu verwendet wird, eine zweite Anwendung, die im Betriebssystem der Rechenkarte ausgeführt wird, aufzufordern, eine Zielfunktion durchzuführen, und das Betriebssystem des Hosts mit dem Betriebssystem der Rechenkarte über ein Treiber-Frontend, das im Betriebssystem des Hosts ausgeführt wird, und das Treiber-Backend kommuniziert, das im Betriebssystem der Rechenkarte ausgeführt wird;
der Ereignisproxy so konfiguriert ist, dass er die erste Ereignisnachricht verarbeitet, um eine zweite Ereignisnachricht umfassend einen Ereignisdateideskriptor zu erzeugen, und eine bidirektionale Abbildung zwischen dem Ereignisdateideskriptor und dem im Betriebssystem der Rechenkarte ausgeführten Treiber-Backend implementiert, wobei der Ereignisdateideskriptor zur Implementierung der Kommunikation zwischen der ersten Anwendung und der zweiten Anwendung auf Basis der virtualisierten Vorrichtung verwendet wird; und
die virtualisierte Vorrichtung so konfiguriert ist, dass sie die vom Ereignisproxy erzeugte zweite Ereignisnachricht empfängt und die Kommunikation zwischen der ersten Anwendung und der zweiten Anwendung unter Verwendung des Ereignisdateideskriptors herstellt, sodass die zweite Anwendung die der ersten Ereignisnachricht entsprechende Zielfunktion durchführt;
wobei das Treiber-Backend speziell konfiguriert ist, zum:
Empfangen der ersten Ereignisnachricht, die vom im Betriebssystem des Hosts ausgeführten Treiber-Frontend gesendet wird, und Senden einer Ereignisbenachrichtigungsnachricht, die de ersten Ereignisnachricht entspricht, an den Ereignisproxy;
wobei der Ereignisproxy speziell konfiguriert ist, zum:
Empfangen der Ereignisbenachrichtigungsnachricht, die der ersten vom Treiber-Backend gesendeten Ereignisnachricht entspricht;
Erzeugen eines Zielereignisdateideskriptors, der nach dem Empfang der Ereignisbenachrichtigungsnachricht auf die virtualisierte Vorrichtung angewendet wird; und
Erzeugen der zweiten Ereignisnachricht basierend auf dem Zielereignisdateideskriptor.

9. Rechenkarte nach Anspruch 8, wobei die virtualisierte Vorrichtung eine vhost-user-Vorrichtung ist.

10. Rechenkarte nach Anspruch 8 oder 9, wobei der Ereignisproxy ferner konfiguriert ist, zum: Erhalten einer dritten Ereignisnachricht, die von der zweiten Anwendung gesendet wird, wobei die dritte Ereignisnachricht ein Ausführungsergebnis der Zielfunktion darstellt;
wobei der Ereignisproxy ferner konfiguriert ist, zum: Verarbeiten der dritten Ereignisnachricht, um eine vierte Ereignisnachricht zu erzeugen; und
wobei der Ereignis-Proxy ferner konfiguriert ist, zum: Senden der vierten Ereignisnachricht an das Treiber-Backend, das im Betriebssystem der Rechenkarte ausgeführt wird, um das Ausführungsergebnis an die erste Anwendung zu senden.

11. Rechenkarte nach Anspruch 10, wobei das Treiber-Backend speziell konfiguriert ist, zum:
Aufrufen einer Zieltreiberschnittstelle des Treiber-Backends über die vierte Ereignisnachricht und Senden einer Treibernachricht, die das Ausführungsergebnis umfasst, an das im Betriebssystem des Hosts ausgeführte Treiber-Frontend, sodass das Treiber-Frontend das Ausführungsergebnis an die erste Anwendung zurückgibt.

12. Rechenkarte nach Anspruch 11, wobei die Zieltreiberschnittstelle eine blockierende Direct-Memory-Access-Schnittstelle ist; und
das Treiber-Backend speziell konfiguriert ist, zum:
Aufrufen der blockierenden Direct-Memory-Access-Schnittstelle des Treiber-Backends über die vierte Ereignisnachricht und Senden der das Ausführungsergebnis umfassenden Treibernachricht an das Treiber-Frontend basierend auf einen Ping-Pong-Kommunikationsmechanismus.

## Revendications

1. Procédé de communication inter-applications basé sur un dispositif virtualisé s'exécutant dans un système d'exploitation d'une carte de calcul, comprenant :
la réception (S101, S201) d'un premier message d'événement envoyé par une première application s'exécutant dans un système d'exploitation d'un hôte, dans lequel le premier message d'événement est utilisé pour demander à une seconde application s'exécutant dans le système d'exploitation de la carte de calcul d'effectuer une fonction cible et le système d'exploitation de l'hôte communique avec le système d'exploitation de la carte de calcul via un frontend de pilote s'exécutant dans le système d'exploitation de l'hôte et un backend de pilote s'exécutant dans le système d'exploitation de la carte de calcul ;
le traitement (S102, S202) du premier message d'événement via un proxy d'événement exécuté dans le système d'exploitation de la carte de calcul pour générer un deuxième message d'événement comprenant un descripteur de fichier d'événement, dans lequel le proxy d'événement est configuré pour mettre en œuvre un mappage bidirectionnel entre le descripteur de fichier d'événement et le backend de pilote exécuté dans le système d'exploitation de la carte de calcul et le descripteur de fichier d'événement est utilisé pour mettre en œuvre une communication entre la première application et la seconde application sur la base du dispositif virtualisé ; et
l'envoi (S103, S203) du deuxième message d'événement au dispositif virtualisé et établissement de la communication entre la première application et la deuxième application à l'aide du descripteur de fichier d'événement via le dispositif virtualisé, de sorte que la deuxième application effectue la fonction cible correspondant au premier message d'événement;
dans lequel la réception (S101, S201) d'un premier message d'événement envoyé par une première application s'exécutant dans un système d'exploitation d'un hôte comprend :
la réception, via le backend de pilote s'exécutant dans le système d'exploitation de la carte de calcul, du premier message d'événement envoyé par le frontend de pilote s'exécutant dans le système d'exploitation de l'hôte ;
le traitement (S102, S202) du premier message d'événement via un proxy d'événement s'exécutant dans le système d'exploitation de la carte de calcul pour générer un deuxième message d'événement comprenant un descripteur de fichier d'événement comprend :
l'envoi (S1021), via le backend de pilote, d'un message de notification d'événement correspondant au premier message d'événement au proxy d'événement ;
la génération (S1022) d'un descripteur de fichier d'événement cible appliqué au dispositif virtualisé après que le proxy d'événement a reçu le message de notification d'événement ; et
la génération (S1023) du deuxième message d'événement sur la base du descripteur de fichier d'événement cible.

2. Procédé selon la revendication 1, dans lequel le dispositif virtualisé est un dispositif vhost-user.

3. Procédé selon la revendication 1 ou 2, dans lequel le procédé comprend en outre :
l'acquisition (S204) d'un troisième message d'événement envoyé par la deuxième application via le proxy d'événement, dans lequel le troisième message d'événement représente un résultat d'exécution de la fonction cible ;
le traitement (S205) du troisième message d'événement via le proxy d'événement pour générer un quatrième message d'événement ; et
l'envoi (S206) du quatrième message d'événement via le proxy d'événement au backend de pilote s'exécutant dans le système d'exploitation de la carte de calcul, pour envoyer le résultat d'exécution à la première application.

4. Procédé selon la revendication 3, dans lequel l'envoi (S206) du quatrième message d'événement via le proxy d'événement au backend de pilote s'exécutant dans le système d'exploitation de la carte de calcul, pour envoyer le résultat d'exécution à la première application, comprend :
l'appel (S2062), via le backend de pilote, d'une interface de pilote cible du backend de pilote via le quatrième message d'événement et l'envoi (S2062) d'un message de pilotage comprenant le résultat d'exécution via le backend de pilote au frontend de pilote s'exécutant dans le système d'exploitation de l'hôte, de sorte que le frontend de pilote renvoie le résultat d'exécution à la première application.

5. Procédé selon la revendication 4, dans lequel l'interface de pilote cible est une interface d'accès direct à la mémoire bloquante ; et
l'appel (S2062), via le backend du pilote, d'une interface de pilote cible du backend de pilote via le quatrième message d'événement et l'envoi (S2062) d'un message de pilotage comprenant le résultat d'exécution via le backend de pilote vers le frontend de pilote s'exécutant dans le système d'exploitation de l'hôte comprend :
l'appel de l'interface d'accès direct à la mémoire bloquante du backend de pilote via le quatrième message d'événement et l'envoi, sur la base d'un mécanisme de communication ping-pong, du message de pilotage comprenant le résultat d'exécution au frontend de pilote.

6. Procédé selon l'une quelconque des revendications 1 à 5, dans lequel le procédé comprend en outre :
l'envoi (S207) d'une première requête d'opération à un proxy d'opération s'exécutant dans le système d'exploitation de la carte de calcul via le dispositif virtualisé, dans lequel la première requête d'opération est utilisée pour demander une opération de d'écriture/lecture en mémoire pour une mémoire partagée de la seconde application et de la première application ;
le traitement (S208) de la première requête d'opération via le proxy d'opération pour générer une seconde requête d'opération, dans lequel la seconde requête d'opération est utilisée pour appeler le backend de pilote s'exécutant dans le système d'exploitation de la carte de calcul ; et
le traitement (S209) de la seconde requête d'opération via le backend de pilote, de sorte que le système d'exploitation de l'hôte effectue l'opération de lecture/écriture en mémoire pour la mémoire partagée.

7. Procédé selon la revendication 6, dans lequel le traitement (S208) de la première requête d'opération via le proxy d'opération pour générer une seconde requête d'opération comprend :
l'obtention (S2081), après la réception de la première requête d'opération, d'une adresse cible de l'opération de lecture/écriture en mémoire correspondant à la première requête d'opération sur la base d'un fichier cible dans le proxy d'opération, dans lequel le fichier cible est mappé en mémoire sur l'espace tampon de la mémoire partagée ; et
la génération (S2082) de la seconde requête d'opération sur la base de l'adresse cible et des informations de mappage d'interface dans le proxy d'opération, dans lequel les informations de mappage d'interface sont utilisées pour indiquer une interface dans le backend de pilote pour le transfert d'une opération de lecture/écriture en mémoire vers le frontend de pilote.

8. Carte de calcul, comprenant un dispositif virtualisé, un proxy d'événement, un proxy d'opération et un backend de pilote qui s'exécutent sur un système d'exploitation de la carte de calcul ;
le backend de pilote est configuré pour recevoir un premier message d'événement envoyé par une première application s'exécutant dans un système d'exploitation d'un hôte, dans laquelle le premier message d'événement est utilisé pour demander à une seconde application s'exécutant dans le système d'exploitation de la carte de calcul d'effectuer une fonction cible et le système d'exploitation de l'hôte communique avec le système d'exploitation de la carte de calcul via un frontend de pilote s'exécutant dans le système d'exploitation de l'hôte et le backend de pilote s'exécutant dans le système d'exploitation de la carte de calcul ;
le proxy d'événement est configuré pour traiter le premier message d'événement pour générer un deuxième message d'événement comprenant un descripteur de fichier d'événement et pour mettre en œuvre un mappage bidirectionnel entre le descripteur de fichier d'événement et le backend de pilote s'exécutant dans le système d'exploitation de la carte de calcul, dans laquelle le descripteur de fichier d'événement est utilisé pour mettre en œuvre une communication entre la première application et la seconde application sur la base du dispositif virtualisé ; et
le dispositif virtualisé est configuré pour recevoir le deuxième message d'événement généré par le proxy d'événement et établir la communication entre la première application et la seconde application à l'aide du descripteur de fichier d'événement, de sorte que la seconde application effectue la fonction cible correspondant au premier message d'événement ;
dans laquelle le backend de pilote est spécifiquement configuré pour :
recevoir le premier message d'événement envoyé par le frontend de pilote s'exécutant dans le système d'exploitation de l'hôte et envoyer un message de notification d'événement correspondant au premier message d'événement au proxy d'événement ;
dans laquelle le proxy d'événement est spécifiquement configuré pour :
recevoir le message de notification d'événement correspondant au premier message d'événement envoyé par le serveur de pilote ;
générer un descripteur de fichier d'événement cible appliqué au dispositif virtualisé après réception du message de notification d'événement ; et
générer le deuxième message d'événement sur la base du descripteur de fichier d'événement cible.

9. Carte de calcul selon la revendication 8, dans laquelle le dispositif virtualisé est un dispositif vhost-user.

10. Carte de calcul selon la revendication 8 ou 9, dans laquelle le proxy d'événement est en outre configuré pour : acquérir un troisième message d'événement envoyé par la seconde application, dans laquelle le troisième message d'événement représente un résultat d'exécution de la fonction cible ;
le proxy d'événement est en outre configuré pour : traiter le troisième message d'événement pour générer un quatrième message d'événement ; et
le proxy d'événement est en outre configuré pour : envoyer le quatrième message d'événement au backend de pilote s'exécutant dans le système d'exploitation de la carte de calcul pour envoyer le résultat d'exécution à la première application.

11. Carte de calcul selon la revendication 10, dans laquelle le backend de pilote est spécifiquement configuré pour :
appeler une interface de pilote cible du backend de pilote via le quatrième message d'événement et envoyer un message de pilotage comprenant le résultat d'exécution au frontend de pilote s'exécutant dans le système d'exploitation de l'hôte, de sorte que le frontend de pilote renvoie le résultat d'exécution à la première application.

12. Carte de calcul selon la revendication 11, dans laquelle l'interface de pilote cible est une interface d'accès direct à la mémoire bloquante ; et
le backend de pilote est spécifiquement configuré pour :
appeler l'interface d'accès direct à la mémoire bloquante du backend de pilote via le quatrième message d'événement et envoyer, sur la base d'un mécanisme de communication ping-pong, le message de pilotage comprenant le résultat d'exécution au frontend de pilote.
